**Europäisches Patentamt**

**European Patent Office**

**Office européen des brevets**

(19)

(11) Veröffentlichungsnummer: **0 057 447**
**B1**

(12)

# EUROPÄISCHE PATENTSCHRIFT

(45) Veröffentlichungstag der Patentschrift:
08.10.86

(51) Int. Cl.⁴: **G 01 S 17/10**

(21) Anmeldenummer: **82100639.2**

(22) Anmeldetag: **29.01.82**

(54) **Entfernungsmessgerät nach dem Prinzip der Laufzeitmessung eines Messlichtimpulses.**

(30) Priorität: **03.02.81 DE 3103567**

(43) Veröffentlichungstag der Anmeldung:
**11.08.82 Patentblatt 82/32**

(45) Bekanntmachung des Hinweises auf die Patenterteilung:
**08.10.86 Patentblatt 86/41**

(84) Benannte Vertragsstaaten:
**CH FR GB LI NL SE**

(56) Entgegenhaltungen:
**EP - A - 0 022 747**
**CH - A - 535 958**
**CH - A - 611 039**
**DE - A - 2 634 627**
**US - A - 3 743 419**
**US - A - 3 752 582**
**US - A - 3 900 261**

(73) Patentinhaber: **MTC Messtechnik und Optoelektronik AG, Avenue Jean Jacques Rousseau 5, CH-2000 Neuchâtel (CH)**

(72) Erfinder: **Chaborski, Hoiko, Dipl.-Ing., Englschalkinger Strasse 239E, D-8000 München 81 (DE)**
Erfinder: **Mehnert, Walter, Dr. Dipl.-Ing., Grillparzerstrasse 6, D-8012 Ottobrunn (DE)**

(74) Vertreter: **Strasser, Wolfgang, Dipl.-Phys et al, Patentanwälte Strohschänk, Uri & Strasser Innere Wiener Strasse 8, D-8000 München 80 (DE)**

## Beschreibung

Die Erfindung betrifft ein optisch einkanaliges Entfernungsmessgerät nach dem Prinzip der Laufzeitmessung von einzelnen Messlichtimpulsen gemäss dem Oberbegriff von Anspruch 1.

Für Entfernungsmessgeräte nach dem Prinzip der Laufzeitmessung eines Messlichtimpulses sind verschiedene Möglichkeiten bekannt, ein mit dem Sendezeitpunkt des Messlichtimpulses zeitlich in definierter Weise verknüpftes Signal zu erzeugen, das zum Start der Laufzeitmessung geeignet ist. Gemäss US-A-3 743 419 besteht eine dieser Möglichkeiten darin, die Laufzeitmessung mit Hilfe eines elektrischen Signals zu starten, das unmittelbar auf elektrischem Weg von dem Signal abgeleitet ist, das dazu dient, die den Messlichtimpuls emittierende Lichtquelle zu triggern, wobei im einfachsten Fall das Triggersignal selbst als Startsignal für die Laufzeitmessung Verwendung findet. Dabei entsteht jedoch das Problem, dass die allgemein verwendeten Lichtquellen, beispielsweise Laser-Dioden auf das Triggersignal mit einer gewissen Verzögerung ansprechen, die nicht konstant sondern Schwankungs- und Drifterscheinungen unterworfen ist. Ausserdem ist es erforderlich, zur Anregung einer Laser-Diode einen sehr hohen Stromgradienten di/dt zu erzeugen, der zur Aussendung eines sehr kräftigen elektromagnetischen Signales führt. Somit ist es während des Zeitraumes, in dem der Messlichtimpuls erzeugt wird, ausserordentlich schwierig und technisch aufwendig, störungsfreie Signale zu erhalten, die den Startzeitpunkt der Laufzeitmessung so exakt reproduzierbar festlegen, wie dies für eine hohe Messgenauigkeit erforderlich ist.

Zur Vermeidung dieser Schwierigkeiten ist es beispielsweise aus DE-A-2 723 835 bekannt, den Startzeitpunkt für die Laufzeitmessung dadurch festzulegen, dass von jedem erzeugten Lichtimpuls ein Teil abgezweigt und auf einem kurzen Referenzlichtweg innerhalb des Messgerätes einem zweiten Empfänger als sogenannter Referenzlichtimpuls zugeführt wird. Dieser zweite Empfänger und die ihm nachgeschaltete Elektronik bilden einen Referenzkanal, der möglichst genauso aufgebaut ist, wie der Empfangskanal, der zum Empfang des am Zielgegenstand reflektierten Messlichtimpulses dient. Dieser Empfangskanal erzeugt ein mit dem Empfangszeitpunkt des Messlichtimpulses in definierter Weise verknüpftes Stopsignal für die Laufzeitmessung. Dabei lässt es sich jedoch nicht vermeiden, dass es im Empfangskanal und im Referenzkanal zu unterschiedlichen Zeitverzögerungen kommt, die überdies unterschiedlichen Drift- und Schwankungserscheinungen unterworfen sein können. Daher ist es erforderlich, sofort nach jeder zur Entfernungsmessung dienenden Laufzeitmessung eine Korrekturwertmessung durchzuführen, bei der der Laufzeitunterschied zwischen den beiden Kanälen gemessen wird. Mit Hilfe dieses Laufzeitunterschiedes muss dann das Laufzeitmessergebnis für den Messlichtimpuls korrigiert werden. Dies erfordert einen hohen technischen Aufwand und beschränkt die Geschwindigkeit, mit der die Messergebnisse gewonnen werden können.

Dieses Problem tritt bei optisch einkanaligen Entfernungsmessgeräten, wie sie beispielsweise aus EP-A-0 022 747 bekannt sind, nicht auf. Hier werden ebenfalls Messlichtimpuls/Referenzlichtimpuls-Paare dadurch erzeugt, dass beispielsweise mit Hilfe eines Strahlenteilers jeder vom Sender abgegebene Lichtimpuls in zwei Teilimpulse zerlegt wird, die nach Durchlaufen unterschiedlicher Lichtwege von ein und demselben elektrooptischen Empfänger empfangen und in zeitsignifikante elektrische Signale zum Starten bzw. Beenden der jeweiligen Laufzeitmessung umgesetzt werden. Eine solche optische einkanalige Anordnung bietet den Vorteil, dass Verzögerungen, mit denen der Sender auf die ihm zugeführten Triggersignale reagiert, in die Laufzeitmessung nicht eingehen, weil diese erst mit Hilfe des gleichzeitig mit dem Messlichtimpuls erzeugten Referenzlichtimpulses begonnen wird. Weiterhin kann davon ausgegangen werden, dass sich das Ansprechverhalten des elektro-optischen Empfängers in der kurzen Zeitspanne, in welcher ihm die beiden Impulse eines Messlichtimpuls/Referenzlichtimpuls-Paares zugeführt werden, nicht ändert. Somit besitzt die Verzögerung, die zwischen Eintreffen eines Lichtimpulses am Empfänger und Erzeugung des zugehörigen zeitsignifikanten Signals auftritt, beim Referenzlichtimpuls und beim Messlichtimpuls, d.h. bei Beginn und bei Beendigung der Laufzeitmessung, mit sehr grosser Genauigkeit die gleiche Länge. Der von der Zeitmessvorrichtung gemessene Zeitabstand zwischen Start- und Stopsignal entspricht also ausserordentlich exakt der Laufzeitdifferenz von Messlichtimpuls und Referenzlichtimpuls. Die durch die Länge des sehr kurz gehaltenen Referenzlichtweges vorgebene Laufzeit des Referenzlichtimpulses kann als Gerätekonstante betrachtet werden, die mit grosser Genauigkeit bekannt ist. Somit lässt sich aus dem gemessenen Zeitabstand die eigentlich interessierende Laufzeit des Messlichtimpulses ohne weiteres sehr genau ermitteln.

Diesem Vorteil einer sehr hohen Messgenauigkeit von optisch einkanaligen Entfernungsmessgeräten steht der Nachteil gegenüber, dass jeder elektro-optische Empfänger nur ein begrenztes zeitliches Auflösungsvermögen besitzt, d.h. zwei nacheinander eintreffende Lichtimpulse nur dann jeweils einwandfrei in ein zeitsignifikantes Start- oder Stopsignal für die Zeitmessvorrichtung umsetzen kann, wenn der zeitliche Abstand der beiden Lichtimpulse einen gewissen zeitlichen Mindestabstand $\tau$ nicht unterschreitet, den man als «Freiwerdezeit» des elektro-optischen Empfängers bezeichnet. Werden keine weiteren Massnahmen ergriffen, so hat diese Freiwerdezeit $\tau$ zur Folge, dass nur die Entfernung von solchen Zielgegenständen gemessen werden kann, die einen Mindestabstand vom Messgerät nicht unterschreiten. Dieser Mindestabstand muss so gross sein, dass der Messlichtimpuls durch das zweimalige Durchlaufen des Mindestabstandes gegenüber dem Referenzlichtimpuls eine Verzögerung erhält, die zumindest etwas grösser als die Freiwerdezeit $\tau$ des elektro-optischen Empfangskanals ist. Wird die Entfernung des Zielgegenstandes kleiner als dieser Mindestabstand, so trifft der Messlichtimpuls zu rasch nach dem Referenzlichtimpuls, d.h. vor Verstreichen der Freiwerdezeit $\tau$ des elektro-optischen Empfängers, oder gleichzeitig mit dem Referenzlichtimpuls oder sogar vor diesem am elektro-optischen Empfänger ein. In allen diesen Fällen ist eine korrekte Entfernungsmessung nicht möglich.

Zur Überwindung dieser Schwierigkeit ist gemäss EP-A-0 022 747 vorgesehen, im Lichtweg des Messlichtimpulses eine optische Verzögerungsleitung anzuordnen, die auch bei extrem kurzen Entfernungen des Zielgegenstandes den Messlichtimpuls so stark verzögert, dass er erst dann am elektro-optischen Empfänger eintrifft, wenn nach Empfang des Referenzlichtimpulses die Freiwerdezeit $\tau$ verstrichen ist. Diese optische Verzögerungsleitung kann nach dem Stand der Technik entweder zwischen dem Sender und der Sendeoptik und/oder zwischen der Empfangsoptik und dem elektro-optischen Empfänger angeordnet sein.

Hieraus ergibt sich jedoch folgender Nachteil: Nimmt man an, dass die Freiwerdezeit $\tau$ des Empfangskanales beispielsweise 1,5 µs beträgt, so muss die optische Verzögerungsleitung eine Länge von ca. 300 m besitzen, da in diesem Fall die Verzögerung des Messlichtimpulses nur das Einfache der Freiwerdezeit $\tau$ betragen muss. Zur Realisierung einer solchen Verzögerungsleitung stehen zwar Lichtleitfasern zur Verfügung, die bei einer Länge von 300 m nur eine sehr geringe Dämpfung aufweisen. Der Einsatz einer solchen Lichtleitfaser ist jedoch nachteilig, weil sie einerseits einen Durchmesser von ca. 1 mm besitzt und daher ein Wickel, der aus einer solchen Lichtleitfaser genügender Länge gebildet ist, einen sehr grossen Platzbedarf aufweist, der den Aufbau eines kleinen und handlichen Entfernungsmessgerätes unmöglich macht; zum anderen führt eine solche Lichtleitfaser zu einer zeitlichen Verbreiterung eines jeden Lichtimpulses, die die Messgenauigkeit nachteilig beeinflusst. Letzteres liesse sich zwar durch die Verwendung einer sogenannten Gradientenfaser vermeiden, doch sind solche Fasern sehr teuer und besitzen ebenfalls einen grossen Durchmesser, der zu einem hohen Platzbedarf führt. Als Ausweg bleibt nur die Verwendung einer sehr dünnen Lichtleitfaser, deren Platzbedarf gering ist und die keine nennenswerte Verbreiterung des Lichtimpulses bewirkt. Eine solche Faser verursacht aber eine erhebliche Dämpfung des Messlichtimpulses, wodurch bei gegebener Sendeleistung die Maximalreichweite eines solchen Messgerätes sehr stark verringert wird.

Demgegenüber liegt der Erfindung die Aufgabe zugrunde, ein optisch einkanaliges Entfernungsmessgerät der im Oberbegriff des Anspruches 1 genannten Art so weiterzubilden, dass mit ihm ohne Reduzierung der durch die Senderleistung vorgegebenen Maximalreichweite auch beliebig kurze Entfernungen mit hoher Genauigkeit gemessen werden können.

Zur Lösung dieser Aufgabe sieht die Erfindung die im Anspruch 1 zusammengefassten Merkmale vor.

Aufgrund dieser Massnahmen arbeiten ein erfindungsgemässes optisch einkanaliges Entfernungsmessgerät bei Zielgegenständen, deren Entfernung grösser ist als der durch die Freiwerdezeit $\tau$ des elektro-optischen Empfängers vorgegebene Mindestabstand ganz «normal», d.h. es wird der von jedem Lichtimpuls abgezweigte, als Referenzlichtimpuls dienende Teil auf einem kurzen Weg innerhalb des Messgerätes dem elektro-optischen Empfänger zugeführt und das hieraus resultierende zeitsignifikante Signal wird als Startsignal für die betreffende Laufzeitmessung verwendet, die dann durch das beim Eintreffen des reflektierten Messlichtimpulses erzeugte zeitsignifikante Signal beendet wird. Ist die Entfernung des Zielgegenstandes gleich dem erwähnten Mindestabstand oder kleiner als dieser, so wird der Referenzlichtimpuls über den langen Abschnitt des Referenzlichtweges dem elektro-optischen Empfänger zugeführt und dabei so stark verzögert, dass er erst nach dem zugehörigen reflektierten Messlichtimpuls am elektro-optischen Empfänger eintrifft. In diesem Fall werden also die Rollen von Messlichtimpuls und Referenzlichtimpuls hinsichtlich der Laufzeitmessung vertauscht, die durch das zum Messlichtimpuls gehörende zeitsignifikante Signal gestartet und durch das zum Referenzlichtimpuls gehörende zeitsignifikante Signal beendet wird. Durch die Wahl der Länge des langen Abschnittes des Referenzlichtweges ist dabei sichergestellt, dass für alle kurzen Entfernungen, also auch dann, wenn die Laufzeit des Messlichtimpulses genau gleich der Freiwerdezeit $\tau$ des elektro-optischen Empfängers ist, die beiden Lichtimpulse mit einem Zeitabstand am elektro-optischen Empfänger eintreffen, der grösser als dessen Freiwerdezeit ist. Damit wird der Entfernungsmessbereich eines solchen optisch einkanaligen Entfernungsmessgerätes nach unten hin praktisch bis zur Entfernung Null erweitert, ohne dass die maximale Reichweite durch eine Bedämpfung des Messlichtimpulses verringert wird. Die Verzögerung des Referenzlichtimpulses mit Hilfe einer dünnen, kostengünstigen und platzsparenden Lichtleitfaser verursacht keinerlei Probleme, weil die Helligkeit des abgezweigten Referenzlichtimpulses immer genügend gross ist, um auch nach der durch eine solche Lichtleitfaser erfolgten Dämpfung am elektro-optischen Empfänger ein hinreichend helles Lichtsignal zu erhalten.

Bei Verwendung des längeren Abschnittes des Referenzlichtweges, der den Referenzlichtimpuls um wenigstens $2\tau$ verzögert, ist der gemessene Zeitabstand $\Delta t$ zwischen dem zeitsignifikanten Signal des Messlichtimpulses und dem zeitsignifikanten Signal des Referenzlichtimpulses nicht unmittelbar gleich der gesuchten Laufzeit $\Delta T$ des Messlichtimpulses, sondern mit dieser über die Gleichung

$$\Delta T = (2\tau + \delta) - \Delta t$$

verknüpft. Dabei ist $2\tau + \delta$ die Verzögerung, die der Referenzlichtweg insgesamt bewirkt, wenn sein längerer Abschnitt verwendet wird. In Abhängigkeit davon, ob der Referenzlichtimpuls dem Empfänger über den längeren oder den kürzeren Abschnitt des Referenzlichtweges zugeführt wird, erfolgt also die Berechnung der Laufzeit des Messlichtimpulses in etwas unterschiedlicher Weise, was aber zu keinen Schwierigkeiten führt.

Vorzugsweise verzögert auch der kürzere Abschnitt des Referenzlichtweges die ihn durchlaufenden Referenzlichtimpulse geringfügig, damit das Startsignal für die Laufzeitmessung in jedem Fall in einem Zeitraum erzeugt wird, in dem die Störsignale, die bei der Emission des Lichtimpulses entstehen, bereits weitgehend abgeklungen sind.

Vorzugsweise erfolgt die Umschaltung von dem einen Abschnitt des Referenzlichtweges auf den anderen selbsttätig. In diesem Fall wird vorteilhafter Weise zuerst ein Messversuch durchgeführt, bei dem der Referenzlichtimpuls dem Empfänger über den kürzeren Abschnitt des Referenzlichtweges zugeführt wird. Wenn sich zeigt, dass keine zwei aufeinanderfolgenden, einwandfrei verarbeitbaren Lichtimpulse am elektro-optischen Empfänger eintreffen, wird von dem kürzeren auf den längeren Abschnitt des Referenzlichtweges umgeschaltet und der Messversuch wiederholt.

Für eine Messgenauigkeit von weniger als $\pm 1$ cm müssen hinsichtlich der exakten zeitlichen Korrelation zwischen dem Empfangszeitpunkt eines Lichtimpulses und dem Erzeugungszeitpunkt des zugehörigen zeitsignifikanten Signals sehr hohe Anforderungen erfüllt werden. Hierfür ist vorzugsweise vorgesehen, dass dem elektro-optischen Empfänger ein Resonanzsystem nachgeschaltet ist, das durch das Signal, welches vom elektro-optischen Empfänger beim Empfang eines Lichtimpulses erzeugt wird, zu einer gedämpften Resonanzschwingung anstossbar ist. Als Auslöser für die Erzeugung eines zeitsignifikanten Signals dient dann einer der sehr genau detektierbaren Nulldurchgänge dieses gedämpften Schwingungssignals. Zwar sind die Amplituden der Halbwellen eines solchen Schwingungssignals von der Stärke des Anstosses, d.h. von der Helligkeit des betreffenden Lichtimpulses abhängig; die Periodenlänge des Schwingungssignals ist aber kurzfristig ausserordentlich konstant, so dass man davon ausgehen kann, dass der zeitliche Abstand beispielsweise des vierten Nulldurchganges der Schwingung, die beim Empfang des Referenzlichtimpulses angestossen wird, vom Empfangszeitpunkt dieses Referenzlichtimpulses exakt gleich dem entsprechenden Abstand des vierten Nulldurchgangs der Schwingung ist, die beim Empfang des zugehörigen Messlichtimpulses angestossen wird. Somit ist es ohne merklichen Messfehler möglich, statt des zeitlichen Abstandes der messtechnisch unmittelbar nur sehr schwer zu erfassenden Empfangszeitpunkte den Zeitabstand zweier gleichliegender zugehöriger Nulldurchgänge zu messen.

Die Erfindung wird im folgenden anhand eines Ausführungsbeispiels unter Bezugnahme auf die Zeichnung beschrieben; in dieser zeigt:

Fig. 1 eine schematische Darstellung der wesentlichen Teile eines erfindungsgemässen Entfernungsmessgerätes,

Fig. 2 ein Schaltbild eines bevorzugten, dem Resonanzsystem des Empfangskanals nachgeschalteten Verstärkers aus Fig. 1,

Fig. 3 Einzelheiten eines optischen Umschalters aus Fig. 1 und

Fig. 4 in vergrössertem Massstab einen Ausschnitt aus einem nach dem gleichen Prinzip wie der Umschalter aus Fig. 3 arbeitenden Dämpfungsgliedes.

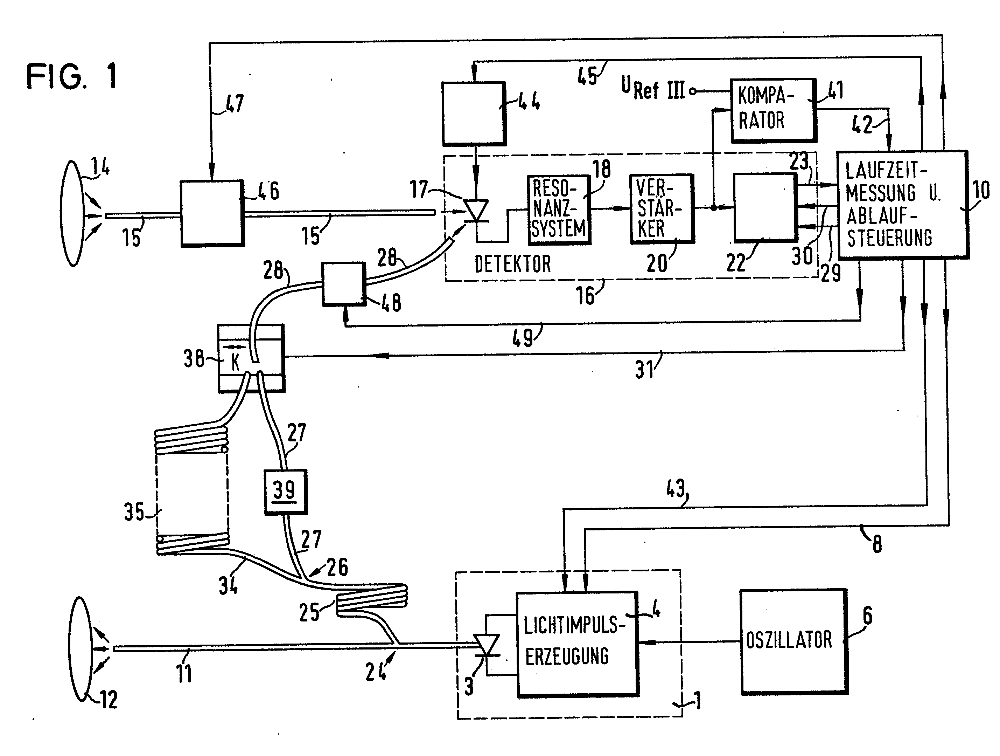

Wie in Fig. 1 dargestellt, besitzt ein erfindungsgemässes Entfernungsmessgerät einen Sender 1, der beispielsweise eine Laser-Sendediode 3 und eine Schaltungsanordnung 4 umfasst, die zum Ansteuern der Sendediode 3 dient. Die Schaltungsanordnung 4 besteht im wesentlichen aus einem «langsam» aufladbaren Energiespeicher, beispielsweise in Form einer Kapazität, und einem steuerbaren elektronischen Schalter, der dazu dient, die im Energiespeicher angesammelte Energie schnell über die Sendediode 3 zu entladen, worauf die Sendediode 3 mit der Emission eines Laser-Lichtimpulses reagiert.

Die Ansteuerung dieses elektronischen Schalters kann für einen periodischen Betrieb mit Hilfe eines Oszillators 6 erfolgen, der mit vorgegebener Frequenz schwingt. Alternativ oder zusätzlich hierzu kann aber auch vorgesehen werden, dass der steuerbare elektronische Schalter zur Auslösung von Einzelimpulsen über eine Steuerleitung 8 von einer zentralen Ablaufsteuerung 10 getriggert wird.

Besitzt das Entfernungsmessgerät einen Zerhacker, um aus einer Batteriespannung die verschiedenen im Gerät benötigten Versorgungsspannungen zu erzeugen, so wird das über die Steuerleitung 8 zugeführte Triggersignal mit den Flanken der von diesem Zerhacker abgegebenen Spannung zeitlich so korreliert, dass der Sendeimpuls in einem Zeitpunkt emittiert wird, der einen Empfang sowohl des Referenzlichtimpulses als auch des Messlichtimpulses in Zeiträumen ermöglicht, in denen Störungen der Versorgungsspannung, die durch diese Zerhackerflanken bedingt sind, mit Sicherheit abgeklungen sind.

Ein erster Teil eines jeden von der Sendediode 3 erzeugten Lichtimpulses wird als Messlichtimpuls verwendet, d.h. er wird über eine Lichtleitfaser 11 und eine Sendeoptik 12, die in Fig. 1 schematisch vereinfacht als einzelne Linse dargestellt ist, zum Zielgegenstand hin ausgesandt, dessen Entfernung gemessen werden soll.

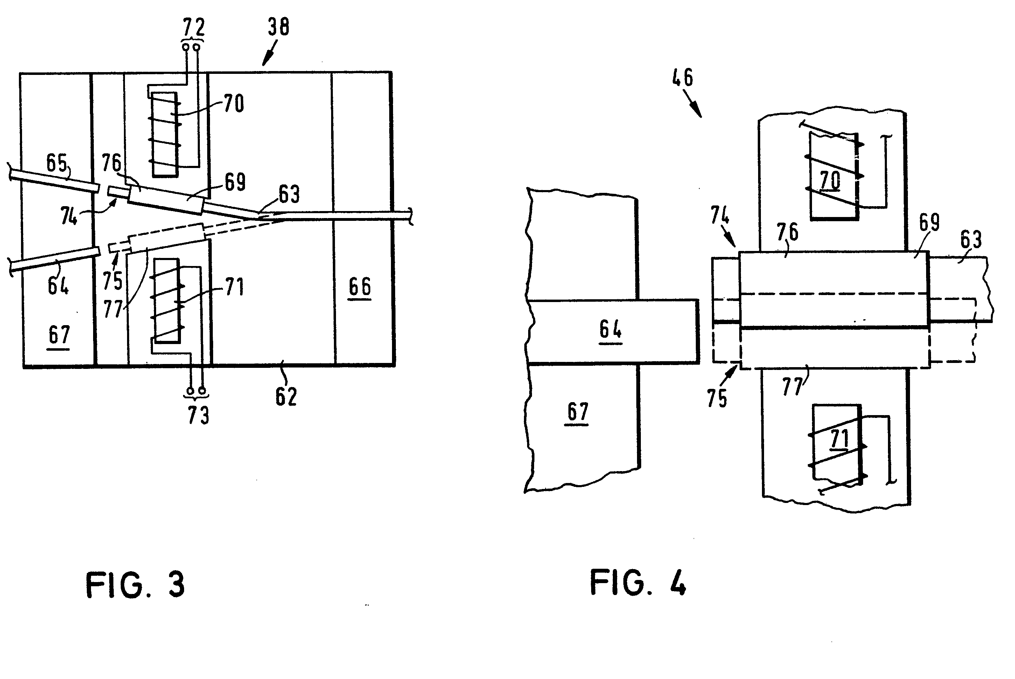

Der zweite Teil eines jeden von der Sendediode 3 erzeugten Lichtimpulses wird als Referenzlichtimpuls verwendet, d.h. er wird durch eine Y-förmige Verzweigung 24 aus der Sende-Lichtleitfaser 11 ausgekoppelt und in einen Referenzlichtweg eingespeist, der zunächst eine Lichtleitfaser-Spule 25 und hinter dieser eine weitere Y-förmige Verzweigung 26 umfasst, hinter der der Referenzlichtweg in zwei funktional zueinander parallele Abschnitte 27 und 34 mit unterschiedlichen Längen aufgeteilt ist. Diese beiden Abschnitte vereinigen sich an einem optischen Umschalter 38 zu einem einzigen Lichtweg 28, der zu einer Photodiode 17 führt, die den elektro-optischen Empfänger des Empfangskanals 16 bildet. Der genaue Aufbau des optischen Umschalters 38 wird weiter unten unter Bezugnahme auf Fig. 3 beschrieben.

An der weiteren Y-förmigen Verzweigung 26 wird jeder Referenzlichtimpuls wieder in zwei Teile aufgespalten, von denen sich der eine längs des kurzen Abschnittes 27 und der andere längs des langen Abschnittes 34 weiterbewegt. In Abhängigkeit von der Stellung des optischen Umschalters 38, der über eine Leitung 31 von der zentralen Ablaufsteuerung 10 betätigt wird, kann nur der eine oder der andere dieser beiden Teile eines jeden Referenzlichtimpulses über den Lichtweg 28 zur Photodiode 17 gelangen, während der jeweils andere Teil unterdrückt wird.

Bei einem Zielgegenstand, der einen hinreichend grossen Abstand aufweist, befindet sich der optische Umschalter 38 in einer Stellung, in der er den kurzen Abschnitt 27 des Referenzlichtweges mit dem Lichtweg 28 verbindet, so dass ein Referenzlichtimpuls, der an der Verzweigung 24 von einem von der Sendediode 3 erzeugten Lichtimpuls abgezweigt wurde, als erster an der Photodiode 17 anlangt. Derjenige Teil des zugehörigen Messlichtimpulses, der vom Zielgegenstand zum Messgerät reflektiert und mit Hilfe eines wieder vereinfacht als einzelne Linse dargestellten optischen Systems 14 in einen Lichtweg 15 eingespeist wird, der ebenfalls zur Photodiode 17 führt, kommt in diesem Fall nach dem Referenzlichtimpuls an der Photodiode 17 an.

Jedes der beiden elektrischen Signale, die von der Photodiode 17 in Antwort auf den Empfang dieser beiden Lichtimpulse erzeugt werden, dient zum Anstossen eines Schwingungsvorganges in einem der Photodiode 17 nachgeschalteten Resonanzsystem 18, das beispielsweise gemäss der DE-A-2 634 627 als Parallel-Resonanzschwingkreis ausgebildet sein kann. Alternativ hierzu kann dieses Resonanzsystem 18 aber auch von einem Serien-Resonanzschwingkreis oder einem anderen elektromagnetischen Schwingungssystem gebildet sein.

Entscheidend ist, dass das Resonanzsystem 18 durch das von der Photodiode 17 beim Empfang eines jeden Lichtimpulses abgegebene Signal zu einem gedämpften Schwingungsvorgang angeregt wird, der im allgemeinen sinusförmig ist und mit exponentiell abnehmender Amplitude der einzelnen Halbschwingungen verläuft. Wenn der Abstand des Zielgegenstandes gross ist, dann ist auch der Zeitabstand zwischen den beiden Lichtimpulsen gross und der erste Schwingungsvorgang, der durch den Empfang des Referenzlichtimpulses ausgelöst wird, ist vollständig abgeklungen, wenn der Messlichtimpuls an der Photodiode 17 eintrifft und den zweiten Schwingungsvorgang auslöst.

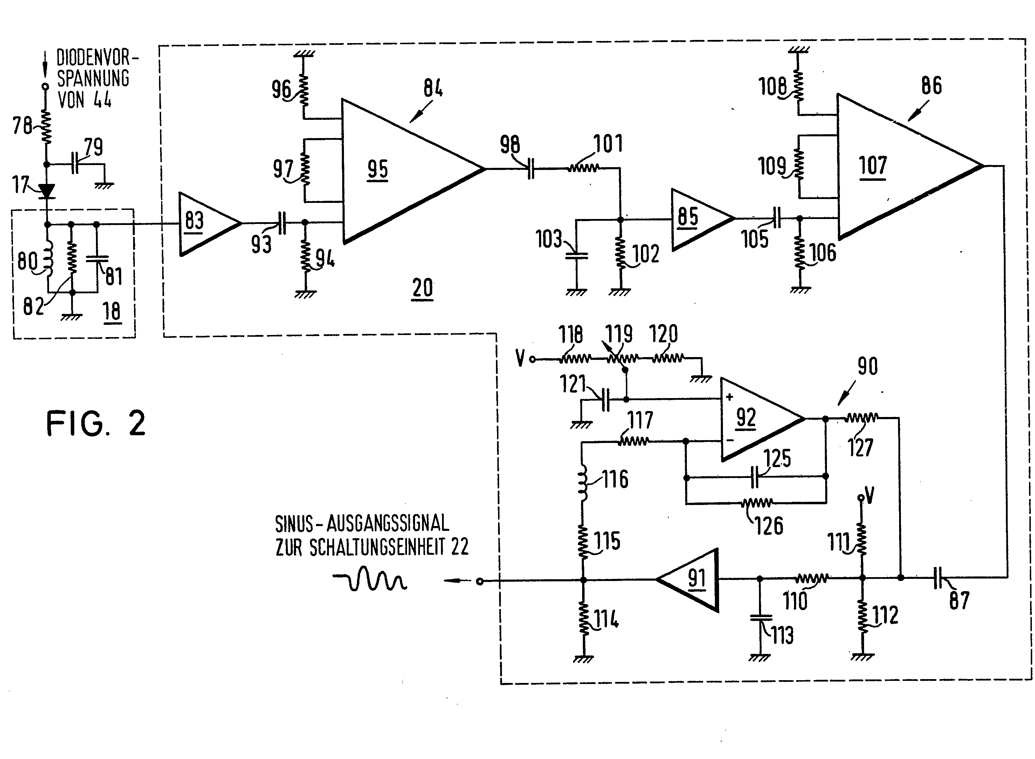

Das bei jedem dieser Schwingungsvorgänge vom Resonanzsystem 18 abgegebene Signal wird durch einen nachgeschalteten Verstärker 20 (siehe Fig. 2) verstärkt und dann einer zur Erzeugung eines zeitsignifikanten Signals dienenden Schaltungsanordnung 22 zugeführt. Hauptaufgabe dieser Schaltungsanordnung 22 ist es, immer dann, wenn von der Photodiode 17 ein Lichtimpuls empfangen worden ist, ein zeitsignifikantes Signal, d.h. ein Signal zu erzeugen, dessen zeitliche Lage in genau definierter Weise mit dem zeitlichen Schwerpunkt des betreffenden Lichtimpulses korreliert ist.

Dieses zeitsignifikante Signal kann beispielsweise eine fallende oder steigende Impulsflanke sein. Aus dem oben Gesagten ergibt sich, dass für jedes Paar von Mess- und Referenzlichtimpulsen, die nacheinander an der Photodiode 17 eintreffen, zwei zeitsignifikante Signale erzeugt werden, die ebenfalls nacheinander auftreten. Das jeweils zuerst auftretende zeitsignifikante Signal wird immer dazu verwendet, die Laufzeitmessung des betreffenden Messlichtimpulses zu starten, während das zweite dazu verwendet wird, diese Laufzeitmessung zu beenden. In dem hier betrachteten Fall, in welchem der Messlichtimpuls von einem Zielgegenstand mit grosser Entfernung reflektiert wird, wird zuerst das dem Referenzlichtimpuls entsprechende zeitsignifikante Signal erzeugt, das somit als Startsignal für die Laufzeitmessung dient. Das dem Messlichtimpuls entsprechende zeitsignifikante Signal wird etwas später erzeugt und dient daher zur Beendigung der Laufzeitmessung.

Zu diesem Zweck werden die beiden zeitsignifikanten Signale über eine Leitung 23 einer Zeitmessvorrichtung zugeführt, die, da sie nicht Gegenstand der vorliegenden Erfindung ist, der Einfachheit halber mit in die zentrale Ablaufsteuerung 10 aufgenommen wurde.

Der Referenzlichtimpuls könnte auch mit Hilfe eines entsprechend angeordneten halbdurchlässigen Spiegels von dem von der Sendediode 3 abgestrahlten Lichts abgezweigt werden. Wesentlich ist, dass sowohl der Sendeoptik 12 als auch dem Referenzlichtweg 25, 27 bzw. 34, 28 gut «durchmischtes» Licht zugeführt wird, d.h. Licht, bei dem die Zeitunterschiede, mit denen verschiedene Oberflächenbereiche der lichtemittierenden Sendediode 3 auf den Triggerimpuls mit einer Lichtabgabe reagieren, weitgehend ausgeglichen sind.

Zweck der hinter der Y-förmigen Verzweigungsstelle 24 angeordneten Lichtleitfaser-Wicklung 25 ist es, auch den dem Empfangskanal 16 über den kurzen Abschnitt 27 des Referenzlichtweges zugeführten Referenzlichtimpuls solange zu verzögern, dass bei seinem Eintreffen an der Photodiode 17 die stärksten, bei der Auslösung des Lichtimpulses in unvermeidlicher Weise miterzeugten Störungen bereits weitgehend abgeklungen sind.

Ist das der Photodiode 17 nachgeschaltete Resonanzsystem 18 durch einen empfangenen Licht-

impuls zu einem gedämpften Schwingungsvorgang angestossen worden, so kann ein erneuter Anstoss, der erfolgt, solange der erste Schwingungsvorgang noch nicht weitgehend wieder abgeklungen ist, zu undefinierten Schwingungsverhältnissen führen, die eine Erzeugung eines dem zweiten Anstoss zeitlich eindeutig zugeordneten zeitsignifikanten Signals durch die Schaltungsanordnung 22 unmöglich machen.

Daher ist vorgesehen, dass die Schaltungsanordnung 22 sofort nachdem sie das ordnungsgemässe Anschwingen des Resonanzsystems 18 erkannt hat, wodurch die Erzeugung eines zeitsignifikanten Signals ausgelöst wird, für einen Mindestzeitraum gesperrt wird, der etwas grösser als die Freiwerdezeit τ des Empfangskanals 16 ist, d.h. etwas grösser als derjenige Zeitraum, der verstreichen muss, bis das Resonanzsystem 18 nach einem vorausgehenden Anstoss ordnungsgemäss ein zweites Mal angestossen werden kann. Frühestens nach dem Verstreichen dieses Mindestzeitabstandes erhält die Schaltungsanordnung 22 von der Ablaufsteuerung 10 über die Leitung 29 ein Rücksetz- bzw. Vorbereitungssignal, das sie für Schwingungsvorgänge des Resonanzsystems 18 wieder empfänglich macht.

Nun kann es bei sehr kleinen Abständen zwischen der Messvorrichtung und dem Zielgegenstand geschehen, dass der vom Zielgegenstand reflektierte Messlichtimpuls vor dem über die Lichtleitfaser 25, 27 und 28 laufenden Referenzlichtimpuls, gleichzeitig mit dem Referenzlichtimpuls oder innerhalb des oben erwähnten Mindestzeitabstandes nach dem Referenzlichtimpuls an der Empfangsdiode 17 eintrifft. In all diesen Fällen schwingt zwar das Resonanzsystem 18 zunächst einmal an und es wird in Antwort hierauf von der Schaltungsanordnung 22 auch ein erstes und somit die Laufzeitmessung startendes zeitsignifikantes Signal erzeugt. Da in diesen Fällen aber der jeweils spätere der beiden Lichtimpulse zu einem Zeitpunkt an der Empfangsdiode 17 eintrifft, in welchem die Schaltungsanordnung 22 noch nicht wieder freigegeben ist, wird kein zweites, die begonnene Laufzeitmessung anhaltendes zeitsignifikantes Signal mehr erzeugt. Da für jedes derartige Messgerät eine maximale Messreichweite vorgebbar ist, erreicht die weiterlaufende Laufzeitmessung sehr schnell einen über die Lichtgeschwindigkeit mit dieser maximalen Messreichweite verknüpften Wert, dessen Überschreiten von der Ablaufsteuerung 10 erkannt und zum Anlass für das Abbrechen der betreffenden Laufzeitmessung und für die Auslösung weiterer Steuerbefehle genommen wird.

Einer dieser Steuerbefehle, der über die Leitung 31 an den optischen Umschalter 38 wiedergegeben wird, veranlasst diesen, statt des kurzen Abschnittes 27 den langen Abschnitt 34 des Referenzlichtweges mit dem zur Photodiode 17 führenden Lichtweg 28 zu verbinden, wodurch der gleichzeitig mit dem Aussenden eines Messlichtimpulses von der Sendediode 3 abgegebene Referenzlichtimpuls um wenigstens das Zweifache der oben genannten Freiwerdezeit τ stärker verzögert

wird, als beim Durchlaufen des kürzeren Abschnitts 27.

Nimmt man beispielsweise an, dass die oben erwähnte Freiwerdezeit etwa 1,5 µs beträgt, so muss die Lichtleitfaser 34 eine Länge von etwa 600 m besitzen. Um diese Länge im Inneren des Gerätes unterbringen zu können, ist es zweckmässig, die Lichtleitfaser 34 als Spule 35 aufzuwickeln. Da im Handel Lichtleitfasern mit einem ausserordentlich kleinen Durchmesser zur Verfügung stehen, ist es möglich, die Abmessungen dieser Spule 35 so klein zu halten, dass sie ohne weiteres auch in einem kleinen Messgerät angeordnet werden kann. Zwar führt eine solche dünne Lichtleitfaser zu relativ hohen Intensitätsverlusten, doch spielt dies für den Referenzlichtimpuls keine Rolle, da in jedem Fall eine genügend hohe Senderleistung zur Verfügung steht, um ein sicheres Anschwingen des Resonanzsystems 18 zu gewährleisten.

Anstelle des optischen Umschalters 38 kann auch zum Zusammenführen der beiden Abschnitte 27, 34 des Referenzlichtwegs eine Y-förmige Verzweigung ähnlich den Verzweigungen 24 und 26 Verwendung finden. In diesem Fall ist dann in jedem der beiden Abschnitte 27 bzw. 34 ein Dämpfungsglied vorgesehen, das durch das Anlegen eines entsprechenden elektrischen Signals zwischen einem sehr niederen Dämpfungswert (nahezu gleich Null) und einem sehr hohen Dämpfungswert (praktisch unendlich) hin- und hergesteuert werden kann. Diese Dämpfungsglieder werden zur Erzielung der Umschaltfunktion von der Ablaufsteuerung 10 über Leitungen, die der Leitung 31 entsprechen, gegensinnig so angesteuert, dass immer eines von ihnen seinen minimalen und das andere seinen maximalen Dämpfungswert annimmt. Als besonders schnell schaltbare Dämpfungsglieder eignen sich z.B. doppeltbrechende PLZT- oder PLMNZT-Keramikplättchen, wie sie beispielsweise im Forschungsbericht K 300 4 des Bundesministeriums für Forschung und Technologie vom August 1979 beschrieben sind.

Damit der Referenzlichtimpuls an der Empfangsdiode 17 unabhängig davon, ob er über den kurzen oder den langen Abschnitt des Referenzlichtweges geführt wurde, immer die gleiche Intensität besitzt, ist in den kurzen Abschnitt 27 ein Dämpfungsglied 39 mit einem festen, der durch den langen Abschnitt 34 verursachten Dämpfung entsprechenden Dämpfungswert eingefügt.

Hat nun also, wie dies oben beschrieben wurde, die Ablaufsteuerung 10 bei einer Stellung des Umschalters 38 bei der der über den kurzen Abschnitt 27 des Referenzlichtweges laufende Referenzlichtimpuls zum Empfangskanal 16 gelangt, festgestellt, dass zwar eine Laufzeitmessung gestartet, nicht aber innerhalb eines vernünftigen Zeitraums gestoppt worden ist, so interpretiert sie dies als eine sehr geringe Entfernung zwischen Messvorrichtung und Zielgegenstand und veranlasst in Antwort hierauf den Umschalter 38 in die andere Stellung überzuwechseln, in der der über den langen Abschnitt 34 laufende Referenzlichtimpuls der Photodiode 17 zugeführt wird. Wird hierauf ein neuer Lichtimpuls beispielsweise dadurch ausgelöst, dass der Schaltungsanordnung 4 über die Leitung 8 ein von der Ablaufsteuerung 10 ausgehendes Triggersignal zugeführt wird, so erreicht der an einem nur einen geringen Abstand von der Messvorrichtung aufweisenden Zielgegenstand reflektierte Messlichtimpuls die Empfangsdiode 17 mit Sicherheit so frühzeitig vor dem durch den langen Abschnitt 34 verzögerten Referenzlichtimpuls, dass beide Lichtimpulse durch den Empfangskanal 16 einwandfrei erfasst und zur Erzeugung von zeitsignifikanten Signalen ausgewertet werden können. Es tritt hier zwar eine Umkehr der Reihenfolge ein, d.h. die Laufzeitmessung wird durch den Messlichtimpuls gestartet und durch den Referenzlichtimpuls beendet. Dies hat lediglich zur Folge, dass der gemessene Zeitabstand $\Delta t$ nicht direkt die gesuchte Laufzeit $\Delta T$ des Messlichtimpulses wiedergibt, sondern mit dieser über die Gleichung $\Delta T = 2\tau + \delta - \Delta t$ verknüpft ist, wobei $2\tau + \delta$ die durch den langen Referenzlichtweg 25, 34 bedingte, sehr genau ausmessbare Verzögerung bedeutet.

Durch das erfindungsgemässe Gerät wird es also möglich, Entfernungen von 0 cm bis zur maximalen Reichweite des Messgerätes mit einer gleichbleibenden absoluten Genauigkeit von weniger als $\pm 1$ cm auszumessen. Da, wie bereits erwähnt, die zur Bildung des langen Abschnittes 34 verwendete Lichtleitfaser eine Länge in der Grössenordnung von etwa 600 m besitzen kann, kann es zur Erzielung der eben genannten Genauigkeit erforderlich sein, temperaturbedingte Längenänderungen dieser Lichtleitfaser zu berücksichtigen. Dies kann entweder dadurch geschehen, dass man für den Umschalter 38 eine Mittelstellung vorsieht, in der er einen Teil des über den kurzen Abschnitt 27 und einen Teil des über den langen Abschnitt 34 laufenden Referenzlichtimpulses durchlässt. Sorgt man dann dafür, dass bei dieser Schalterstellung kein Messlichtimpuls empfangen wird, so kann man den Zeitabstand zwischen diesen beiden Referenzlichtimpulsen ausmessen und damit einen Korrekturwert für eine Veränderung der durch den langen Abschnitt 34 bedingten Verzögerung erhalten.

Eine andere Möglichkeit besteht darin, die Temperatur im Inneren des Messgerätes zu messen und hieraus einen Korrekturwert für die Verzögerung $2\tau + \delta$ abzuleiten.

Wie Fig. 1 weiterhin zeigt, wird das vom Verstärker 20 abgegebene Signal nicht nur der Schaltungsanordnung 22 zur Erzeugung eines zeitsignifikanten Signals sondern auch einem Komparator 41 zugeführt, der dieses Verstärkersignal mit einer vorgegebenen Referenzspannung vergleicht. Diese Referenzspannung ist so gewählt, dass sie in etwa der oberen Grenze des Linearitätsbereichs des Verstärkers 20 entspricht. Wird nämlich dieser Linearitätsbereich überschritten, so kann es zu erheblichen zeitlichen Verschiebungen der Nulldurchgänge des vom Verstärker 20 abgegebenen Schwingungssignals bezüglich des Anstosszeitpunktes des Resonanzsystems 18 kommen, so dass eine einwandfreie zeitliche Zuordnung dieser Nulldurchgänge bzw. eines von einem solchen Nulldurchgang abgeleiteten zeitsignifikanten Signals zum Empfangszeitpunkt des auslösenden Lichtimpulses nicht mehr gegeben ist.

Bei einem Messgerät, das einerseits zur Erzielung einer möglichst grossen Maximalreichweite mit einer möglichst hohen Sendeleistung und einer hohen Empfindlichkeit auf der Empfängerseite arbeitet, andererseits aber auch in der Lage sein soll, die Entfernung gering beabstandeter, unter Umständen eine hohe Reflektivität besitzender Zielkörper exakt auszumessen, kann es insbesondere in den zuletztgenannten Fällen durchaus zu einer Übersteuerung des Verstärkers 20 kommen, da die Amplitude des vom Resonanzsystems 18 abgegebenen Schwingungssignals von der Stärke des Anstosses, d.h. also von der Helligkeit des von der Photodiode 17 empfangenen Lichtimpulses abhängt. Tritt eine solche Übersteuerung des Verstärkers 20 ein, so wird dies vom Komparator 41 erkannt, der über die Leitung 42 ein entsprechendes Übersteuerungssignal an die Ablaufsteuerung 10 abgibt. Aufgrund dieses Übersteuerungssignals wird von der Ablaufsteuerung 10 der eben gewonnene Messwert verworfen und die Wiederholung der Messung mit reduzierter Helligkeit des emittierten Messlichtimpulses und/oder mit erhöhter Dämpfung des empfangenen, reflektierten Messlichtimpulses und/oder verminderter Empfindlichkeit des Empfängers eingeleitet.

Dieses der Steuerung der Dynamik des Entfernungsmessgeräts dienende Verfahren ist Gegenstand der europäischen Ausscheidungsanmeldung Nr. 85 104 782.9 (EP-A-0 165 403).

Gemäss Fig. 2 ist dem über einen Vorwiderstand 78 und einen Glättungskondensator 79 mit Spannung versorgten Photoempfänger, also z.B. der Photodiode 17, ein Resonanzsystem 18 nachgeschaltet, das aus einem den Arbeitswiderstand der Photodiode 17 bildenden Parallel-Resonanzschwingkreis besteht, der aus einer Spule 80, der Sperrschichtkapazität der Photodiode 17 und einer zusätzlichen, parallelgeschalteten, externen Kapazität 81 sowie einem Widerstand 82 aufgebaut ist.

Dieses Resonanzsystem wird durch einen von der Photodiode 17 empfangenen Lichtimpuls zu einem sinusförmigen Schwingungsvorgang angeregt, dessen zweite Halbwelle im allgemeinen die grösste Amplitude besitzt und der dann nach einem exponentiellen Dämpfungsgesetz wieder abklingt.

Es hat sich gezeigt, dass zumindest kurzfristig, mit Sicherheit also für den äusserst kurzen Zeitraum, innerhalb dessen auch bei grossen auszumessenden Entfernungen Referenzlichtimpuls und Messlichtimpuls bei der Empfangs-Photodiode 17 eintreffen, die Nulldurchgänge dieses Schwingungsvorganges in ausserordentlich exakter, reproduzierbarer Weise mit dem zeitlichen Schwerpunkt des anstossenden Lichtimpulses korreliert sind. Dies gilt auch für die Nulldurchgänge des Ausgangssignals des dem Resonanzsystem 18 nachgeschalteten Verstärkers 20, solange dieser Verstärker nicht übersteuert, d.h. in seinem Linearitätsbereich betrieben wird.

Ein Entfernungsmessgerät mit einem solchen Resonanzsystem ist Gegenstand der europäischen Ausscheidungsanmeldung Nr. 85 104 783.7 (EP-A-0 166 106).

Somit sind die Nulldurchgänge des Ausgangssignals des Verstärkers 20 ausserordentlich gut geeignet, um ein zeitsignifikantes Signal auszulösen, mit dessen Hilfe die zur Laufzeitmessung des Lichtimpulses erforderliche Zeitmessung entweder gestartet oder beendet wird.

Wie Fig. 2 weiterhin zeigt, besitzt dieser Verstärker 20 als Eingangsstufe einen Impedanzwandler 83, der dazu dient, den relativ hohen Ausgangswiderstand des Resonanzsystems 18 an den niederen Eingangswiderstand der nachfolgenden ersten Verstärkerstufe 84 anzupassen, deren Ausgangssignal über einen weiteren Impedanzwandler 85 der zweiten Verstärkerstufe 86 zugeführt wird. Dieser zweistufige Aufbau des Verstärkers 20, bei dem jede der beiden Stufen eine vergleichsweise niedere Verstärkung von etwa 1:10 besitzt, hat den Vorteil, dass er eine wesentlich geringere Schwingneigung zeigt, als ein einstufiger Verstärker mit einer entsprechenden Verstärkung 1:100.

Das Ausgangssignal der zweiten Verstärkerstufe 86 wird über einen galvanisch entkoppelnden Kondensator 87 einer den Gleichspannungs-Nullpegel auf einem fest vorgegebenen Wert konstant haltenden Regelschaltung 90 zugeführt, die in ihrem Vorwärts-Zweig einen dritten Impedanzwandler 91 mit zugehöriger Beschaltung und in ihrem Rückkopplungszweig einen normalen driftarmen Operationsverstärker 92 mit entsprechender Beschaltung umfasst. Der somit gegen temperaturbedingte Schwankungen und aufgrund von Bauelemente-Alterung auftretende Drifterscheinungen stabilisierte Ausgangs-Gleichspannungspegel, dem immer dann, wenn das Schwingungssystem 18 durch einen von der Photodiode 17 empfangenen Lichtimpuls zu einem Schwingungsvorgang angeregt worden ist, ein verstärktes, gedämpftes, sinusförmiges Schwingungssignal überlagert ist, wird dann unmittelbar der Schaltungsanordnung 22 zur Erzeugung eines zeitsignifikanten Signals zugeführt, deren Hauptaufgabe es ist, das ordnungsgemässe Anschwingen des Resonanzsystems 18 festzustellen und daraufhin einen vorgegebenen Nulldurchgang dieser Schwingung zu detektieren und zur Erzeugung eines zeitsignifikanten Signals zu verwenden.

Bei einer bevorzugten Ausführungsform des Verstärkers 20 finden als Impedanzwandler 83, 85 und 91 integrierte Schaltungen Verwendung, wie sie beispielsweise von der Firma National Semiconductor unter der Bezeichnung LH 0033-CG vertrieben werden.

Das Kernstück einer jeden Verstärkerstufe 84 bzw. 86 bildet ein programmierbarer Verstärker, wie er beispielsweise unter der Bezeichnung AM 733-T von der Firma Advanced Micro Devices vertrieben wird. Im Rückkopplungszweig der Regelschaltung 90 kommt ein Operationsverstärker 92 zum Einsatz, der von der Firma Analog Devices unter der Bezeichnung AD 741 LN angeboten wird. Für alle diese integrierten Schaltungen ist in Fig. 2 nur die zur Signalverarbeitung erforderliche externe Beschaltung wiedergegeben, während die den entsprechenden Datenblättern entnehmbare Stromversorgungs-Beschaltung der klareren Darstellung halber weggelassen ist.

Wie man der Fig. 2 entnimmt, wird das Ausgangssignal des Impedanzwandlers 83 über einen Koppelkondensator 93 dem über einen Widerstand 94 mit Masse verbundenen ersten Eingang des programmierbaren Verstärkers 95 der ersten Verstärkerstufe 84 zugeführt. Der zweite Eingang des Verstärkers 95 ist über einen Widerstand 96 zur Masse hin abgeschlossen. Zwischen die Programmiereingänge ist ein die Verstärkung dieser Verstärkerstufe festlegender Programmierwiderstand 97 geschaltet.

Das Ausgangssignal der ersten Verstärkerstufe 84 wird über einen Kondensator 98 und einen von den Widerständen 101 und 102 gebildeten Spannungsteiler dem Eingang des zweiten Impedanzwandlers 85 zugeführt, der mit dem Verbindungspunkt der beiden Widerstände 101 und 102 verbunden ist. Zwischen diesem Punkt und der Masse ist ein Siebkondensator 103 zur Ausschaltung von HF-Störungen angeordnet.

Das Ausgangssignal des Impedanzwandlers 85 wird über einen galvanisch trennenden Koppelkondensator 105 dem einen, über einen Widerstand 106 mit Masse verbundenen Eingang des programmierbaren Verstärkers 107 der zweiten Verstärkerstufe 86 zugeführt. Der zweite Eingang dieses programmierbaren Verstärkers 107 ist über einen Widerstand 108 auf Masse gelegt, während die Verstärkung dieser Verstärkungsstufe durch einen Programmierwiderstand 109 vorgegeben wird. Hier zeigt sich ein weiterer Vorteil des zweistufigen Aufbaus des Verstärkers 20, da hierdurch die Möglichkeit geboten wird, über zwei voneinander unabhängige Programmiereingänge die gesamte Verstärkung ausserordentlich genau festzulegen und an die gegebenen Verhältnisse anzupassen.

Das im folgenden nicht mehr weiter veränderte Wechselspannungs-Ausgangssignal der zweiten Verstärkerstufe 86 gelangt über den zur galvanischen Entkopplung dienenden Kondensator 87 und einen Vorwiderstand 110 an den Eingang des dritten Impedanzwandlers 91, dessen Eingangs-Gleichspannung grob durch einen Spannungsteiler festgelegt wird, der von den Widerständen 111 und 112 gebildet ist, die zwischen eine Versorgungsspannungsquelle und die Masse geschaltet sind. Die Beeinflussung der Eingangs-Gleichspannung des Impedanzwandlers 91, die dazu dient, seine Ausgangsgleichspannung konstant zu halten, erfolgt mit Hilfe des Ausgangssignals des Rückkopplungszweiges der Regelschaltung 90, das dem gemeinsamen Verbindungspunkt der Widerstände 110, 111 und 112 und des Kondensators 87 zugeführt wird. Unmittelbar zwischen den Eingang des Impedanzwandlers 91 und die Masse ist noch ein HF-Störungen unterdrückender Kondensator 113 geschaltet.

Der Ausgang des Impedanzwandlers 91 ist einerseits über einen Widerstand 114 mit Masse verbunden. Andererseits wird das an ihm erscheinende Gleichspannungssignal über einen Widerstand 115, eine Wechselspannungs-Anteile unterdrückende Drossel 116 und einen weiteren Widerstand 117 dem invertierenden Eingang des Operationsverstärkers 92 zugeführt, dessen nichtinvertierender Eingang mit Hilfe eines Spannungsteilers, der von den Widerständen 118, 119 und 120 gebildet wird, auf ein Referenzpotential gelegt ist, das durch einen Siebkondensator 121 von HF-Störungen freigehalten wird. Das Ausgangssignal des Operationsverstärkers 92 wird einerseits über einen Rückkopplungszweig, der aus einem Kondensator 125 und einem hierzu parallel geschalteten Widerstand 126 besteht, an den invertierenden Eingang des Operationsverstärkers 92 und andererseits über einen Widerstand 127 auf den oben genannten Verbindungspunkt der Widerstände 110, 111, 112 und des Kondensators 87 geführt.

In Fig. 3 sind die Einzelheiten des in Fig. 1 nur pauschal dargestellten optischen Umschalters 38 wiedergegeben.

Fig. 3 zeigt eine schematische Draufsicht auf eine Grundplatte 62, auf der Lichtleitfaserenden 63, 64 und 65 mit Hilfe entsprechender Befestigungsvorrichtungen 66 und 67 so befestigt sind, dass sie in einer gemeinsamen Ebene liegen. Das Lichtleitfaserende 63 ragt zu den beiden anderen Lichtleitfaserenden 64 und 65 hin so weit über die Befestigungsvorrichtung 66 hinaus, dass es parallel zur Oberfläche der Grundplatte 62 und in etwa senkrecht zu seiner Längsrichtung hin- und herbewegbar ist. Dagegen werden die beiden Lichtleitfaserenden 64 und 65 durch ihre Befestigungsvorrichtung 67 unbeweglich so festgehalten, dass sie sich in einem geringen gegenseitigen Abstand erstrecken.

Auf das bewegliche Lichtleitfaserende 63 ist eine Hülse 69 aus ferromagnetischem Material aufgeschoben, deren Innendurchmesser an den Aussendurchmesser der Lichtleitfaser so angepasst ist, dass diese beiden Teile in einem Reibeingriff miteinander stehen.

In Längsrichtung des Lichtleitfaserendes 63 gesehen sind links und rechts neben dem Lichtleitfaserende zwei geringfügig schräg gestellte Anschläge 76 und 77 vorgesehen, die bei der Hin- und Herbewegung des Lichtleitfaserendes 63 eine in Fig. 3 mit durchgezogenen Linien dargestellte Endlage 74 und eine gestrichelt dargestellte Endlage 75 definieren. Die Position der Anschläge 76 und 77 ist so gewählt, dass die Stirnfläche des Lichtleitfaserendes 63 in der einen Endlage 74 der Stirnfläche des Lichtleitfaserendes 65 und in der anderen Endlage 75 der Stirnfläche des Lichtleitfaserendes 64 jeweils in geringem Abstand und möglichst deckungsgleich gegenüberliegt. Die Schrägstellung der Anschläge 76 und 77 ist in Fig. 3 stark übertrieben wiedergegeben. Sie dient dazu, die Verformung des beweglichen Lichtleitfaserendes 63 möglichst klein zu halten. Auch der Abstand der beiden Anschläge 76 und 77 kann in der Praxis wesentlich kleiner gewählt werden, als dies in Fig. 3 der Deutlichkeit halber dargestellt ist; dies ist für einen möglichst schnellen Umschaltvorgang von grosser Bedeutung.

Das Hin- und Herbewegen des Lichtleitfaserendes 63 erfolgt mit Hilfe von zwei Elektromagneten 70 und 71, die hinter dem Anschlag 76 bzw. 77 angeordnet sind und über Anschlüsse 72 bzw. 73 erregt oder abgeschaltet werden können. Die Steuerung dieser Elektromagneten 70 und 71 erfolgt bei dem Ausführungsbeispiel nach Fig. 1 durch die Ablaufsteuerung 10.

Mit Hilfe eines derartigen Umschalters ist es möglich, das nur eine sehr geringe Masse besitzende Lichtleitfaserende 63 sehr schnell von einer Endlage in die andere zu bringen, wobei es durch eine entsprechend genaue gegenseitige Ausrichtung der Längsachse der Lichtleitfaserenden in der einen bzw. anderen Endlage möglich ist, die an dem kleinen Spalt zwischen den Stirnflächen der Lichtleitfaserenden auftretenden Intensitätsverluste sehr klein zu halten.

In Fig. 4 ist in vergrössertem Massstab ein Ausschnitt aus einer dem Umschalter 38 ähnlichen, als Dämpfungsglied 46 zur Verwendung kommenden Anordnung wiedergegeben, wobei der Einfachheit halber die Grundplatte 62 und die Befestigungsvorrichtung 66 aus Fig. 3 nicht mit dargestellt, in Wirklichkeit aber selbstverständlich vorhanden sind.

Der wesentlichste Unterschied der Vorrichtung nach Fig. 4 zu der nach Fig. 3 besteht darin, dass einerseits durch die Befestigungsvorrichtung 67 nur ein einziges Lichtleitfaserende 64 festgehalten wird, das Lichtleitfaserende 65 also nicht vorhanden ist, und dass der in Fig. 4 obere Anschlag 76 soweit zum gegenüberliegenden Anschlag 77 hin verschoben ist, dass die Stirnfläche des beweglichen Lichtleitfaserendes 63 in der auch hier mit durchgezogenen Linien dargestellten Endlage 74 noch immer einen Teil der Stirnfläche des unbeweglichen Lichtleitfaserendes 64 überdeckt. In der anderen, in gestrichelten Linien wiedergegebenen Endlage 75 liegen die beiden Stirnflächen einander wie beim Ausführungsbeispiel nach Fig. 3 möglichst deckungsgleich gegenüber.

Bringt man also bei der Vorrichtung nach Fig. 4 das bewegliche Lichtleitfaserende 63 durch eine entsprechende Ansteuerung des Magneten 70 in die Endlage 74, so kann nur ein Teil des vom Lichtleitfaserende 64 oder vom Lichtleitfaserende 63 weitergeleiteten Lichts auf das jeweils andere Lichtleitfaserende übergekoppelt werden, so dass sich hier eine sehr gute Dämpfungsmöglichkeit ergibt, wobei der Dämpfungsfaktor durch eine entsprechende Positionierung des Anschlags 76 innerhalb weiter Grenzen einstellbar ist.

**Patentansprüche**

1. Optisch einkanaliges Entfernungsmessgerät nach dem Prinzip der Laufzeitmessung von einzelnen Messlichtimpulsen mit
- einem Sender (1) zur Erzeugung von Lichtimpulsen,

– einer Verzweigungsanordnung (24) zum Aufteilen des bei der Erzeugung eines jeden Lichtimpulses vom Sender (1) abgegebenen Lichtes in zwei Teilimpulse,

– einer Sendeoptik (12) zum Aussenden der jeweils einen Teilimpulse als Messlichtimpulse zum Zielgegenstand,

– einer Empfangsoptik (14) zum Empfang der vom Zielgegenstand reflektierten Messlichtimpulse,

– einem Referenzlichtweg definierter Länge zum Weiterleiten der jeweils anderen Teilimpulse als Referenzlichtimpulse innerhalb des Messgerätes,

– einem einen elektro-optischen Empfänger (17) umfassenden Empfangskanal (16) zur Erzeugung jeweils eines zeitsignifikanten Signals beim Empfang sowohl der dem elektro-optischen Empfänger (17) von der Empfangsoptik (14) zugeleiteten reflektierten Messlichtimpulse als auch der dem elektro-optischen Empfänger (17) über den Referenzlichtweg zugeleiteten Referenzlichtimpulse,

– einer Zeitmessvorrichtung (10) zum Messen des Zeitabstandes der beiden zeitsignifikanten Signale eines jeden Messlichtimpuls/Referenzlichtimpuls-Paares, und

– einer Rechen- und Auswerteeinheit (10) zum Berechnen der gesuchten Entfernung aus dem gemessenen Zeitabstand der zeitsignifikanten Signale eines jeden Messlichtimpuls/Referenzlichtimpuls-Paares, dadurch gekennzeichnet,

– dass der Referenzlichtweg zwei zueinander optisch parallele Abschnitte (27, 34) unterschiedlicher Länge umfasst, von denen der längere Abschnitt (34) die ihn durchlaufenden Referenzlichtimpulse um das wenigstens Zweifache der Freiwerdezeit (τ) des Empfangskanals (16) mehr verzögert als der kürzere Abschnitt (27) die ihn durchlaufenden Referenzlichtimpulse,

– dass eine Vorrichtung (38) zur alternativen Freigabe der beiden Abschnitte (27, 34) des Referenzlichtweges vorgesehen und so gesteuert ist, dass die Referenzlichtimpulse für Entfernungen des Zielgegenstandes, bei denen die Laufzeit der Messlichtimpulse um die Freiwerdezeit (τ) des Empfangskanals (16) grösser ist als die durch den kurzen Abschnitt (27) des Referenzlichtweges gegebene Laufzeit der Referenzlichtimpulse, über den kürzeren Abschnitt (27) und für kleinere Entfernungen des Zielgegenstandes über den längeren Abschnitt (34) des Referenzlichtweges zum elektro-optischen Empfänger (17) des Empfangskanals (16) gelangen, und

– dass durch die Rechen- und Auswerteeinheit (10) die gesuchte Entfernung in Abhängigkeit davon, ob der Referenzlichtimpuls über den kürzeren Abschnitt (27) oder über den längeren Abschnitt (34) des Referenzlichtweges zum elektro-optischen Empfänger (17) gelangt, entweder direkt aus dem gemessenen Zeitabstand zwischen den zeitsignifikanten Signalen oder aus der Differenz zwischen der durch den längeren Abschnitt (34) verursachten Verzögerungszeit und dem gemessenen Zeitabstand.

2. Entfernungsmessgerät nach Anspruch 1, dadurch gekennzeichnet, dass der Empfangskanal (16) eine Schaltungsanordnung (22) umfasst, durch die nach dem Empfang eines ersten Lichtimpulses der Empfangskanal (16) zumindest bis zum Ende seiner vorgegebenen Freiwerdezeit (τ) für den Empfang weiterer Lichtimpulse gesperrt ist, und dass die Vorrichtung (38) zur alternativen Freigabe der beiden Abschnitte (27, 34) des Referenzlichtweges automatisch von der Freigabe des kürzeren Abschnittes (27) auf die Freigabe des längeren Abschnittes (34) umgesteuert wird, wenn nach Empfang eines ersten Lichtimpulses innerhalb einer der maximalen Reichweite des Messgerätes entsprechenden Zeit vom Empfangskanal (16) kein zweites zeitsignifikantes Signal abgegeben worden ist.

3. Entfernungsmessgerät nach Anspruch 1 oder 2, dadurch gekennzeichnet, dass die beiden optisch zueinander parallelen Abschnitte (27, 34) des Referenzlichtweges an ihren dem Sender (1) zugewandten Enden durch eine feste Verzweigungsstelle (26) miteinander verbunden sind, durch die jeder Referenzlichtimpuls in zwei Teilimpulse aufspaltbar ist, von denen der eine den kürzeren Abschnitt (27) und der andere den längeren Abschnitt (34) durchläuft.

4. Entfernungsmessgerät nach Anspruch 3, dadurch gekennzeichnet, dass die beiden optisch zueinander parallelen Abschnitte (27, 34) des Referenzlichtweges an ihren dem Empfangskanal (16) zugewandten Enden durch einen optischen Umschalter miteinander verbunden sind, der die Vorrichtung (38) zur alternativen Freigabe der beiden Abschnitte (27, 34) bildet und in Abhängigkeit von seiner Stellung entweder den Teil-Referenzlichtimpuls, der den kürzeren Abschnitt (27) durchlaufen hat, oder den Teil-Referenzlichtimpuls, der den längeren Abschnitt (34) durchlaufen hat, in einen Lichtweg (28) einspeist, der zum elektro-optischen Empfänger (17) des Empfangskanals (16) führt.

5. Entfernungsmessgerät nach Anspruch 4, dadurch gekennzeichnet, dass der optische Umschalter (38) eine dritte Schaltstellung einnehmen kann, in der zu Eichzwecken sowohl ein Teil des Teil-Referenzlichtimpulses, der den kürzeren Abschnitt (27) durchlaufen hat, als auch ein Teil des Teil-Referenzlichtimpulses, der den längeren Abschnitt (34) durchlaufen hat, in den Lichtweg (28) eingespeist wird, der zum elektro-optischen Empfänger (17) des Empfangskanals (16) führt.

6. Entfernungsmessgerät nach Anspruch 3, dadurch gekennzeichnet, dass die beiden optisch zueinander parallelen Abschnitte (27, 34) des Referenzlichtweges an ihren dem Empfangskanal (16) zugewandten Enden über eine feste Verzweigungsstelle in einen gemeinsamen, zum elektro-optischen Empfänger (17) führenden Lichtweg (28) einmünden und dass die Vorrichtung (38) zur alternativen Freigabe der beiden Abschnitte (27, 34) von zwei Dämpfungsgliedern gebildet ist, von denen das eine in den kürzeren Abschnitt (27) und das andere in den längeren Abschnitt (34) eingefügt ist und die im Gegentakt zwischen einem sehr

19 0 057 447 20

kleinen und einem sehr grossen Dämpfungswert hin- und herschaltbar sind.

7. Entfernungsmessgerät nach einem der vorhergehenden Ansprüche, dadurch gekennzeichnet, dass in den kürzeren Abschnitt (27) ein festes Dämpfungsglied (39) eingefügt ist, durch das die durch den kürzeren Abschnitt (27) insgesamt bewirkte Dämpfung denselben Wert erhält, wie die durch den längeren Abschnitt (34) bewirkte Dämpfung.

8. Entfernungsmessgerät nach einem der vorhergehenden Ansprüche, dadurch gekennzeichnet, dass der Referenzlichtweg eine optische Verzögerungseinrichtung (25) umfasst, durch die zumindest die den kürzeren Abschnitt (27) des Referenzlichtweges durchlaufenden Referenzlichtimpulse um eine Zeit verzögert werden, die wesentlich kleiner als das Zweifache der Freiwerdezeit ($\tau$) des Empfangskanals (16) aber so gross ist, dass zum Zeitpunkt des Eintreffens dieser Referenzlichtimpulse am elektro-optischen Empfänger (17) die bei der Erzeugung des zugehörigen Lichtimpulses durch den Sender (1) verursachten Störungen im wesentlichen abgeklungen sind.

**Claims**

1. Distance measuring apparatus with a single optical channel operating on the principle of measuring the time of travel of individual measuring light pulses and having
- a transmitter (1) for generating light pulses,
- a branching means (24) for dividing into two partial pulses the light emitted by the transmitter (1) at the generation of each light pulse,
- an optical transmitting means (12) for transmitting one of each pair of partial pulses as a measuring light pulse towards the target,
- an optical receiving means (14) for receiving the measuring light pulses reflected from the target,
- a reference light path having a defined length for forwarding the second one of each pair of partial pulses as a reference light pulse inside the measuring apparatus,
- a receiving channel (16) comprising an electro-optical receiver (17) for generating a time significant signal upon reception of each reflected measuring light pulse being transmitted from the optical receiving means (14) to the electro-optical receiver (17) as well as upon reception of each reference light pulse forwarded to the electric-optical receiver (17) along the reference light path,
- a time measuring means (10) for measuring the time distance between the two time significant signals of each measuring light pulse/reference light pulse pair, and
- a computing and evaluating unit (10) for calculating the wanted distance from the measured time distance between the time significant signals of each measuring light pulse/reference light pulse pair,
characterized in
- that the reference light path comprises two sections (27, 34) being optically parallel to each other and having different lengths, the longer section (34) delaying the reference light pulses passing through it by at least twice the recovery time ($\tau$) of the receiving channel (16) more than the shorter section (27) delays the reference light pulses passing therethrough,
- that a means (38) is provided for alternately unblocking the two sections (27, 34) of the reference light path which means is controlled so that the reference light pulses arrive at the electro-optical receiver (17) of the receiving channel (16) along the shorter section (27) for distances of the target for which the time of travel of the measuring light pulses is by the recovery time ($\tau$) of the receiving channel (16) longer than the time of travel of the reference light pulses established by the short section (27) of the reference light path, and along the longer section (34) of the reference light path for shorter distances of the target, and in
- that the wanted distance is calculated by the computing and evaluating unit (10) either directly from the measured time distance between the time significant signals or from the difference between the delay time caused by the longer section (34) and the measured time distance in dependency on whether the the reference light pulse arrives at the electro-optical receiver along the shorter section (27) or along the longer section (34) of the reference light path.

2. Distance measuring apparatus according to claim 1, characterized in that the receiving channel (16) comprises a circuit arrangement (22) by which, after reception of a first light pulse, the receiving channel (16) is blocked against the reception of further light pulses at least until the end of its given recovery time ($\tau$), and in that the means (38) for alternately unblocking the two sections (27, 34) of the reference light path is automatically switched over from unblocking the shorter section (27) to unblocking the longer section (34) if, after reception of a first light pulse, the receiving channel (16) does not provide a second time significant signal within a period of time corresponding to the maximum range of the measuring apparatus.

3. Distance measuring apparatus according to claim 1 or 2, characterized in that the two sections (27, 34) of the reference light path, which are optically in parallel to each other, at their ends being directed towards the transmitter (1) are connected to each other by a fixed branching point (26) by which each reference light pulse is dividable into two partial pulses of which the one passes through the shorter section (27) and the other passes through the longer section (34).

4. Distance measuring apparatus according to claim 3, characterized in that the two sections (27, 34) of the reference light path, which are optically parallel to each other, at their ends being directed towards the receiving channel (16) are connected to each other by an optical change-over switch which represents the means (38) for alternately unblocking the two sections (27, 34), and which, in dependence on its position, feeds either the partial reference light pulse which has passed through the shorter section (27) or the partial reference light pulse which has passed through the longer section (34) into a light path (28) leading towards the electro-optical receiver (17) of the receiving channel (16).

5. Distance measuring apparatus according to claim 4, characterized in that the optical change-over switch (38) can occupy a third switch position in which, for calibration purposes, a part of the partial reference light pulse which has passed through the shorter section (27) as well as a part of the partial reference light pulse which has passed through the longer section (34) are fed into the light path (28) leading towards the electro-optical receiver (17) of the receiving channel (16).

6. Distance measuring apparatus according to claim 3, characterized in that the two sections (27, 34) of the reference light path, which are optically parallel to each other, at their ends being directed towards the receiving channel (16) are joined by a fixed branching point with a common light path (28) leading towards the electro-optical receiver (17), and in that the means (38) for alternately unblocking the two sections (27, 34) consists of two attenuation units the one of which is arranged in the shorter section (27) and the other one of which is arranged in the longer section (34), said units being alternately switchable to and fro between a very low and a very high attenuation value.

7. Distance measuring apparatus according to any preceding claim, characterized in that in the shorter section (27) a fixed attenuation unit is arranged, by means of which the attenuation all together caused by the shorter section (27) attains the same value as the attenuation caused by the longer section (34).

8. Distance measuring apparatus according to any preceding claim, characterized in that the reference light path comprises an optical delay means (25) by which at least the reference light pulses passing through the shorter section (27) of the reference light path are delayed by a time span which is essentially shorter than twice the recovery time ($\tau$) of the reception channel (16) but still is so long that at the instants, at which these reference light pulses arrive at the electro-optical receiver (17) the interferences substantially have disappeared which were caused by the transmitter (1) at the generation of the respective light pulse.

**Revendications**

1. Appareil de mesure de distance à un seul canal optique selon le principe de la mesure du temps de propagation de différentes impulsions de lumière de mesure, comportant
- un émetteur (1) pour la production d'impulsions de lumière,
- une disposition de ramification (24) pour la division de la lumière émise par l'émetteur (1) lors de la production de chacune des impulsions de lumière en deux impulsions partielles,
- une optique d'émission (12) pour l'émission des impulsions partielles, une à la fois, vers la cible,

- une optique de réception (14) pour la réception des impulsions de lumière de mesure réfléchies par la cible,
- un parcours de lumière de référence de longueur définie pour l'acheminement, chaque fois, des autres impulsions partielles comme impulsions de lumière de référence à l'intérieur de l'appareil de mesure,
- un canal de réception (16) comprenant un récepteur électro-optique (17) pour la production, chaque fois, d'un signal ayant une signification de temps lors de la réception, aussi bien des impulsions de lumière de mesure réfléchies amenées par l'optique de réception (14) au récepteur électro-optique (17), que des impulsions de lumière de référence amenées au récepteur électro-optique (17) en passant par le parcours de lumière de référence,
- un dispositif de mesure de temps (10) pour la mesure de l'intervalle de temps des deux signaux ayant une signification de temps de chacune des paires impulsion de lumière de mesure/impulsion de lumière de référence, et
- une unité de calcul et d'interprétation (10) pour le calcul de la distance cherchée en partant de l'intervalle de temps mesuré des deux signaux ayant une signification de temps de chacune des paires impulsions de lumière de mesure/impulsion de lumière de référence,

caractérisé en ce
- que le parcours de lumière de référence comprend deux tronçons optiquement parallèles (27, 34) de longueur différente, dont le tronçon le plus long (34) retarde les impulsions de lumière de référence qui le parcourent dans une mesure supérieure d'au moins deux fois le temps de libération ($\tau$) du canal de réception (16) au retard appliqué par le tronçon le plus court (27) aux impulsions de lumière de référence qui le parcourent,
- en ce qu'un dispositif (38) pour la libération alternative des deux tronçons (27, 34) du parcours de lumière de référence est prévu et est commandé de telle sorte que les impulsions de lumière de référence, pour des distances de la cible auxquelles le temps de propagation des impulsions de lumière de mesure est supérieur, dans une mesure égale au temps de libération ($\tau$) du canal de réception (16), au temps de propagation des impulsions de lumière de référence donné par le tronçon court (27) du parcours de lumière de référence, arrivent au récepteur électro-optique (17) du canal de réception (16) en passant par le tronçon le plus court (27) et pour de plus petites distances de la cible, en passant par le tronçon le plus long (34) du parcours de lumière de référence, et
- en ce que par l'unité de calcul et d'interprétation (10), la distance cherchée est calculée sous la dépendance du fait que l'impulsion de lumière de référence arrive au récepteur électro-optique (17) en passant par le tronçon le plus court (27) ou en passant par le tronçon le plus long (34) du parcours de lumière de référence, soit directement d'après l'intervalle de temps mesuré entre les signaux ayant une signification de temps, soit d'après la différence entre le temps de retard causé par le tronçon le plus long (34) et l'intervalle de temps mesuré.

2. Appareil de mesure de distance selon la revendication 1, caractérisé en ce que le canal de réception (16) comprend une disposition de circuit (22) par laquelle, après la réception d'une première impulsion de lumière, le canal de réception (16) est bloqué pour la réception de nouvelles impulsions de lumière au moins jusqu'à la fin de son temps de libération prescrit (τ), et en ce que le dispositif (38) pour la libération alternative des deux tronçons (27, 34) du parcours de lumière de référence est commuté automatiquement de la libération du tronçon le plus court (27) à la libération du tronçon le plus long (34) si, après réception d'une première impulsion de lumière, dans le cadre d'un temps correspondant à la portée maximale de l'appareil de mesure, aucun deuxième signal ayant une signification de temps n'a été émis par le canal de réception (16).

3. Appareil de mesure de distance selon l'une des revendications 1 et 2, caractérisé en ce que les deux tronçons optiquement parallèles entre eux (27, 34) du parcours de lumière de référence sont reliés entre eux à leurs extrémités tournées vers l'émetteur (1) par un endroit de ramification fixe (26) par lequel chaque impulsion de lumière de référence peut être divisée en deux impulsions partielles dont l'une parcourt le tronçon le plus court (27) et l'autre le tronçon le plus long (34).

4. Appareil de mesure de distance selon la revendication 3, caractérisé en ce que les deux tronçons optiquement parallèles entre eux (27, 34) du parcours de lumière de référence sont reliés entre eux, à leurs extrémités tournées vers le canal de réception (16), par un commutateur optique qui forme le dispositif (38) pour la libération alternative des deux parcours (27, 34) et qui, sous la dépendance de sa position, introduit dans un parcours de lumière (28) qui conduit au récepteur électro-optique (17) du canal de réception (16), soit l'impulsion partielle de lumière de référence qui a parcouru le tronçon le plus court (27), soit l'impulsion partielle de lumière de référence qui a parcouru le tronçon le plus long (34).

5. Appareil de mesure de distance selon la revendication 4, caractérisé en ce que le commutateur optique (38) peut prendre une troisième position de commutation dans laquelle aux fins d'étalonnage, aussi bien une partie de l'impulsion partielle de lumière de référence qui a parcouru le tronçon le plus court (27) qu'une partie de l'impulsion partielle de lumière de référence qui a parcouru le tronçon le plus long, sont introduites dans le parcours de lumière (28) qui conduit au récepteur électro-optique (17) du canal de réception (16).

6. Appareil de mesure de distance selon la revendication 3, caractérisé en ce que les deux tronçons optiquement parallèles entre eux (27, 34) du parcours de lumière de référence débouchent, à leurs extrémités tournées vers le canal de réception (16), en passant par un endroit de ramification fixe, dans un parcours de lumière (28) conduisant au récepteur électro-optique (17), et en ce que le dispositif (38) pour la libération alternative des deux tronçons (27, 34) est formé par deux éléments d'amortissement dont l'un est inséré dans le tronçon le plus court (27) et l'autre dans le tronçon le plus long (34) et qui peuvent être manœuvrés symétriquement en va-et-vient entre une très petite et une très grande valeur d'amortissement.

7. Appareil de mesure de distance selon l'une des revendications précédentes, caractérisé en ce que dans le tronçon le plus court (27) est inséré un élément d'amortissement fixe (39) par lequel l'amortissement causé au total par le tronçon le plus court prend la même valeur que l'amortissement causé par le tronçon le plus long (34).

8. Appareil de mesure de distance selon l'une des revendications précédentes, caractérisé en ce que le parcours de lumière de référence comprend un dispositif optique de retard (25) par lequel au moins les impulsions de lumière de référence parcourant le tronçon le plus court (27) du parcours de lumière de référence sont retardées d'un temps qui est notablement plus petit que le double du temps de libération (τ) du canal de réception (16), mais qui est si grand qu'au moment de l'arrivée de ces impulsions de lumière de référence au récepteur électro-optique (17), les perturbations causées lors de la production de l'impulsion de lumière correspondante par l'émetteur (1) sont pratiquement amorties.

FIG. 1

FIG. 2

DIODENVOR-
SPANNUNG
VON 44

SINUS-AUSGANGSSIGNAL
ZUR SCHALTUNGSEINHEIT 22

0 057 447

FIG. 4

FIG. 3

19